(19) Europäisches Patentamt
European Patent Office
Office européen des brevets

(11) **EP 2 168 123 B1**

(12) **EUROPEAN PATENT SPECIFICATION**

(45) Date of publication and mention
of the grant of the patent:
**18.05.2011 Bulletin 2011/20**

(51) Int Cl.:
***G11B 7/0065*** (2006.01)

(21) Application number: **08774530.3**

(22) Date of filing: **30.06.2008**

(86) International application number:
**PCT/EP2008/058376**

(87) International publication number:
**WO 2009/003978 (08.01.2009 Gazette 2009/02)**

(54) **DIRECTORY HOLOGRAM FORMING AN ANCHOR LOCATION OF A PATTERN OF STORED HOLOGRAMS**

EINEN ANKERORT EINER STRUKTUR AUS GESPEICHERTEN HOLOGRAMMEN BILDENDES VERZEICHNISHOLOGRAMM

HOLOGRAMME DE RÉPERTOIRE FORMANT UN EMPLACEMENT D'ANCRAGE D'UN MOTIF D'HOLOGRAMMES STOCKÉS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.06.2007 US 771149**
**29.06.2007 US 771179**

(43) Date of publication of application:
**31.03.2010 Bulletin 2010/13**

(73) Proprietor: **International Business Machines Corporation**
**Armonk, NY 10504 (US)**

(72) Inventors:
• **BATES, Allen, Keith**
**Tucson, Arizona 85716 (US)**
• **HAUSTEIN, Nils**
**D-55270 Soergenloch (DE)**
• **KLEIN, Craig, Anthony**
**Tucson, Arizona 85748 (US)**
• **WINARSKI, Daniel, James**
**Tucson, Arizona 85710-6237 (US)**

(74) Representative: **Robertson, Tracey**
**IBM United Kingdom Limited**
**Intellectual Property Law**
**Hursley Park**
**Winchester, Hampshire SO21 2JN (GB)**

(56) References cited:
EP-A- 1 507 178        WO-A-2005/103842
WO-A-2006/093254        WO-A-2007/126235
US-B1- 6 285 474        US-B1- 7 116 626

**EP 2 168 123 B1**

**Description**

FIELD OF THE INVENTION

This invention relates to holographic data storage and method. More particularly, the present invention relates to the storage of data as holograms at a plurality of locations of a holographic storage medium.

BACKGROUND OF THE INVENTION

Holographic storage comprises a high density data storage capability. Typically, data is recorded into a holographic medium by employing a data beam that is two-dimensional in nature and comprises a rectangular image of a large number of bits arranged in a raster pattern. The data beam and a reference beam are separately directed to the holographic medium and intersect and interfere to form an interference wave front that is recorded as a holographic image known as a hologram into the holographic medium. Additional holograms may be recorded along linear tracks and at various depths of the holographic medium to provide a high capacity storage.
EP 1 507 178 A1 discloses a hologram recording apparatus which includes a record angle change device capable of relatively changing the record angle of a hologram recording medium relative to signal light and reference light.
WO 2007/126245 A discloses a hologram recording and/or reproducing apparatus, a hologram recording and/or reproducing method, and a hologram recording medium which includes predetermined patterns to prevent distortion of a signal from occurring when the data page is reproduced.
WO 2005/103842 A discloses calibration of holographic data storage systems using holographic media calibration features which can be read, written or read and written by a HDSS.
US-B1-6 285 474 discloses a method and apparatus capable of filtering based on desired spatial frequency components and of matched filtering of high recognition capability without losing functions of data recording and reconstruction as well as high speed transmission and retrieval features and mass storage capacity characteristics of a holographic memory.
US-B1-7 116 626 discloses a holographic storage system including micro-actuators is presented. In one example of one aspect of the invention, the device included a spatial light modulator, a detector, a storage medium and at least one micro-actuator configured to move at least one of the spatial light modulator.
WO 2006/093254 A1 discloses a template matching processing device which includes a first calculation means for calculating a plurality of correlation values indicating the correlation between an inputted detection image and a predetermined template image for each pixel unit while shifting the template image with respect to the detection image in the pixel unit; and second calculation means for calculation coordinate position of the detection image according to the coordinate position of the center of gravity of the correlation values.

SUMMARY OF THE INVENTION

The invention is defined by the appended claims.
Holographic storage systems, and methods are configured to arrange holograms and/or to read the arranged holograms.
For a fuller understanding of the present invention, reference should be made to the following detailed description taken in conjunction with the accompanying drawings.

BRIEF DESCRIPTION OF THE DRAWINGS

Embodiments of the present invention will now be described, by way of examples only, with reference to the accompanying drawings in which:

FIG. **1** is a diagrammatic illustration of a holographic storage drive in accordance with a preferred embodiment of the present invention;

FIG. **2** is a schematic illustration of the holographic storage drive of FIG. **1** in accordance with a preferred embodiment of the present invention;

FIG. **3** is diagrammatic illustration of holographic media employed in the holographic storage drive of FIGS. 1 and 2 in accordance with a preferred embodiment of the present invention;

FIG. **4** is diagrammatic illustration of an alternative holographic media employed in the holographic storage drive of FIGS. 1 and 2 in accordance with a preferred embodiment of the present invention;

FIG. **5** is a schematic illustration of the holographic storage drive of FIGS. 1 and 2 employed in a read process in accordance with a preferred embodiment of the present invention;

FIG. **6** is a schematic illustration of the holographic storage drive of FIGS. 1 and 2 employed in an alternative read process in accordance with a preferred embodiment of the present invention;

FIG. **7** is a schematic illustration of an alternative embodiment of a holographic storage drive in accordance with the present invention in accordance with a preferred embodiment of the present invention;

FIG. **8** is a flow chart depicting an embodiment of the write process of the present invention in accordance with a preferred embodiment of the present invention;

FIG. **9** is a flow chart depicting an embodiment of the read process of the present invention in accordance with a preferred embodiment of the present invention;

FIG. **10** is diagrammatic illustration of a state diagram for convolution encoding of a RAID system employed in the holographic storage drive of FIG. 1 in accordance with a preferred embodiment of the present invention;

FIG. **11** is diagrammatic illustration of a circuit for convolution encoding of a RAID system employed in the holographic storage drive of FIG. 1 in accordance with a preferred embodiment of the present invention;

FIG. **12** is a schematic illustration of the holographic storage drive of FIG. **1** employed for RAID storage in accordance with a preferred embodiment of the present invention;

FIG. **13** is a diagrammatic illustration of a stripe layout of a RAID system employed in the holographic storage drive of FIGS. **1** and **12** in accordance with a preferred embodiment of the present invention;

FIG. **14** is a diagrammatic illustration of trellis decoding of a RAID system employed in the holographic storage drive of FIGS. **1** and **12** in accordance with a preferred embodiment of the present invention; and

FIG. **15** is an encoding-decoding table for the RAID system of FIGS. **10**, **11**, **13** and **14** in accordance with a preferred embodiment of the present invention.

## DETAILED DESCRIPTION OF THE INVENTION

This invention is described in preferred embodiments in the following description with reference to the Figures, in which like numbers represent the same or similar elements. While this invention is described in terms of the best mode for achieving this invention's objectives, it will be appreciated by those skilled in the art that variations may be accomplished in view of these teachings without deviating from the scope of the invention.

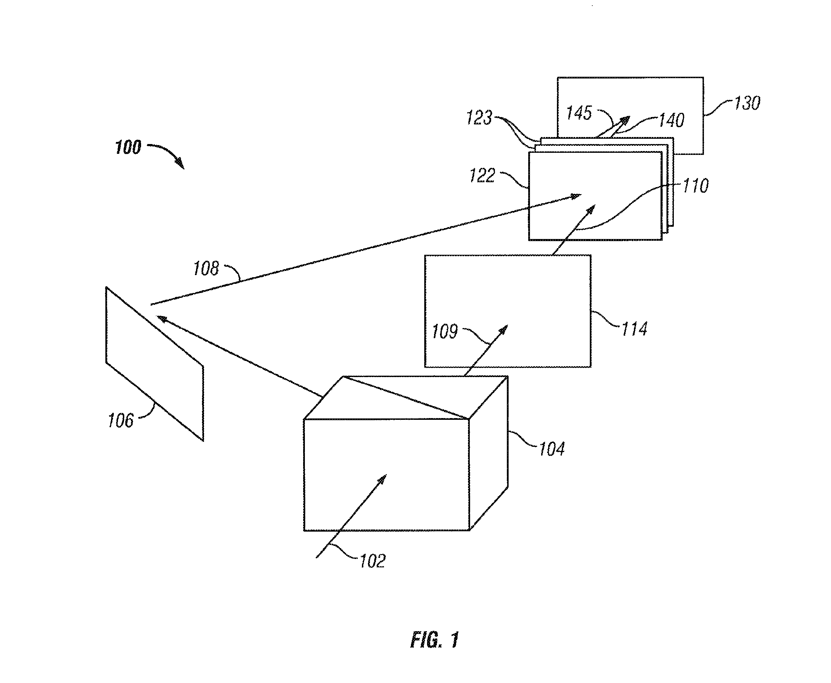

Referring to FIGS. **1**, **2** and **3**, an embodiment of a holographic storage drive **100** of a holographic storage system **200** is illustrated having one possible type of write path, called a "transmissive" light path. A light source **101** provides a laser beam **102** which is split by beam splitter **104** into a reference beam **108** and a carrier beam **109**. The reference beam **108** is reflected by surface mirror **106** to the holographic storage media **119**. The carrier beam **109** passes through a transmissive spatial light modulator (TSLM) **114** and is modulated thereby to provide a signal beam **110**. As examples, the laser beam **102** may be at a blue wavelength of 405nm, or may be at a green light wavelength of 532nm, or may be at a red light wavelength of 650nm, or at an infrared wavelength of 780nm, or another wavelength of light tuned to the recording and/or reading characteristics of the holographic storage media. The holographic storage media **119** may comprise an element of the holographic storage drive **100**, or alternatively be removable.

In holographic information storage, an entire segment of information **122** is stored at once as an optical interference pattern within a thick, photosensitive optical material, such as holographic storage media **119**. This is done by intersecting two coherent laser beams within the material. One beam, called the reference beam **108**, is designed to be simple to reproduce, for example, a collimated beam with a planar wavefront. The other beam, called the signal beam **110**, is modulated so as to contain the information to be stored. The resulting optical interference pattern from the two coherent laser beams causes chemical and/or physical changes in the photosensitive optical material to provide a replica of the interference pattern. As examples, the replica of the interference pattern is stored as a change in the absorption, refractive index, or thickness of the photosensitive optical material.

When the stored interference pattern, called a hologram, is illuminated with one of the two waves that were used during recording, some of the incident light is diffracted by the stored interference pattern in such a fashion that the information can be read by a detector **130**. Illuminating the hologram **122** with the reference beam **108** reconstructs the stored information as beam **145**, and illuminating the hologram **122** with the signal beam **110** reconstructs the reference beam as beam **140**.

A large number of these holograms **122**, **123** may be superimposed in the same media and can be accessed independently, as long as they are distinguishable by the direction or the spacing of the holograms. Such separation can be accomplished by changing the angle between the signal and reference beams or by changing the laser wavelength. Also, the holographic storage drive may reposition the holographic storage media **119**. Any particular hologram can then be read out independently by illuminating the hologram with a beam that was used to store that hologram. Because of the thickness of the hologram, the beam is diffracted by the interference pattern in such a fashion that only the desired beam is significantly reconstructed and imaged on a detector **130**.

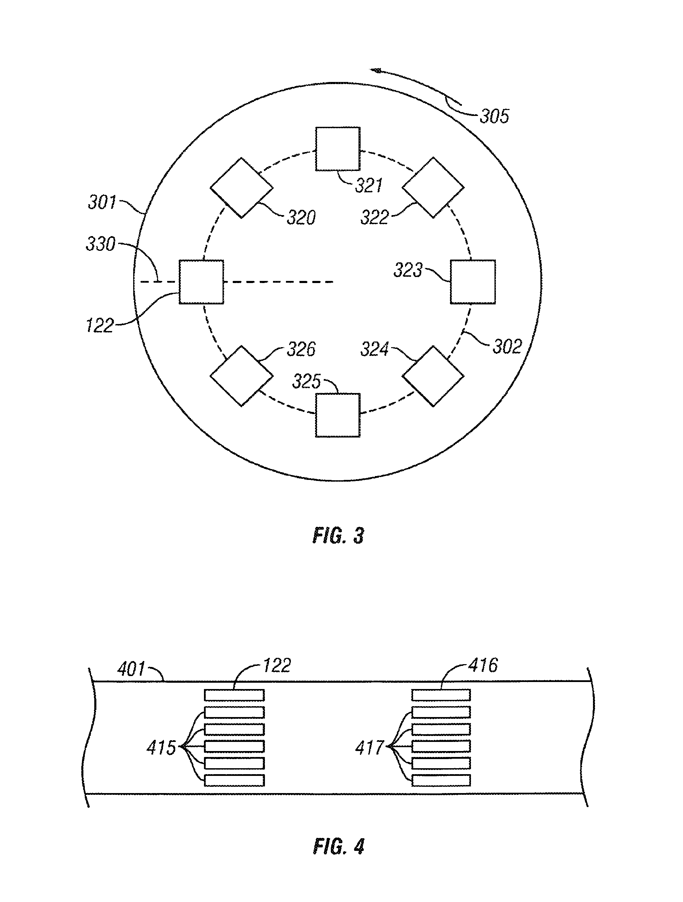

Examples of various holograms are illustrated in FIG. **3** in a surface holographic media **301** and shown as holograms **122**, **320**, **321** and **322-326**, in the example distributed on data track **302**. The holograms may be accessed by moving the media **301** in the direction of arrow **305**. Alternatively or additionally, holograms may be distributed laterally, for example in different tracks, or within the thickness of the holographic storage media.

Further examples of various holograms are illustrated in FIG. **4** in a volume holographic media **401** and shown as holograms **122**, **415**, **416** and **417**. The holograms may be accessed by moving the focus point in media **401** or repositioning the media laterally.

In another example, the holograms **122**, **320**, **321** and **322-326** of FIG. **3** may also be stacked within the media **301** as shown by holograms **122**, **415**, **416** and **417** of FIG. **4**.

High storage densities are achieved by positioning the holograms closely together and much closer than depicted in the illustrations.

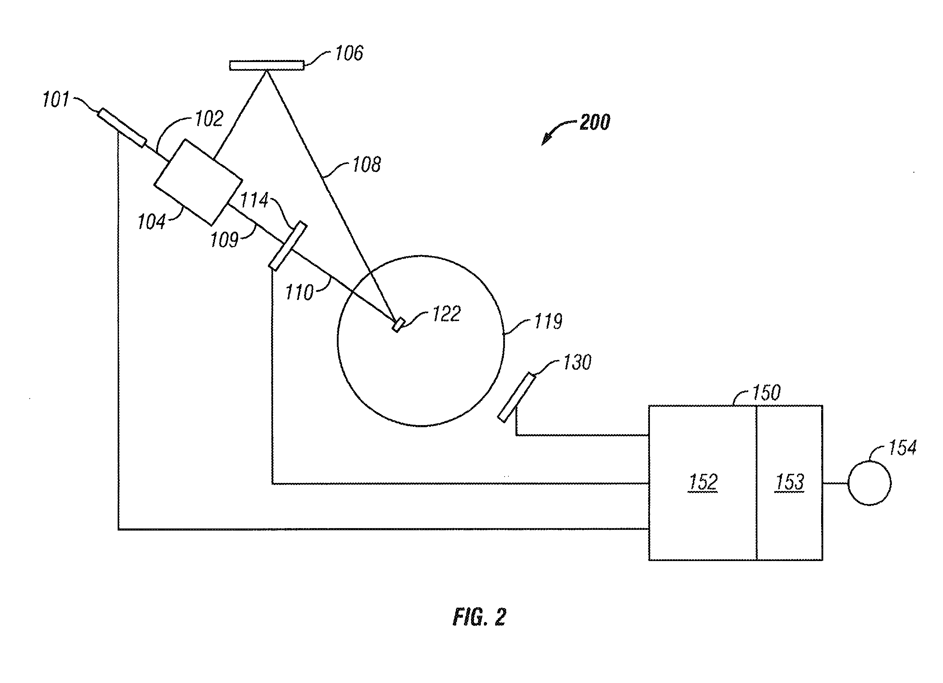

Referring to FIGS. **1** and **2**, a transmissive spatial light modulator (TSLM) **114** may comprise a translucent LCD-type device, where information is represented by either a light or a dark pixel on the TSLM display. The carrier beam **109** picks up the image displayed by the TSLM **114** as the light passes through the TSLM and is modulated thereby to provide the signal beam **110** which is directed to the holographic storage media **119** to then interfere with reference beam **108** to form hologram **122**.

Referring to FIGS. **1** and **2**, the holographic storage drive **100** is operated by a control **150**, comprising one or more computer processors **152** and one or more memories or storage apparatus **153**. The control **150** and the holographic storage drive may form a holographic storage system **200**, or the control may comprise or be supplemented by additional computer processors which together operate the drive to provide the storage functionality of the holographic storage system. For example, the control **150** operates the light source **101**, the TSLM **114**, the detector **130**, and the positioning of the beams and/or the holographic storage media **119**.

The invention can take the form of an entirely hardware embodiment, an entirely software embodiment or an embodiment containing both hardware and software elements, which includes but is not limited to resident software, microcode, firmware, etc.

Furthermore, the invention can take the form of a computer program product accessible from a computer usable or computer readable medium providing program code for use by or in connection with a computer or any instruction execution system. For the purposes of this description, a computer usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer readable medium include a semiconductor or solid state memory, magnetic tape, a removable computer diskette, and random access memory (RAM), a read-only memory (ROM), a rigid magnetic disk and an optical disk. Current examples of optical disks include compact disk - read only memory (CD-ROM), compact disk - read/write (CD-R/W), Digital Versatile Disk (DVD), High Definition DVD (HD-DVD) and Blu-Ray Disk (BD).

A data processing system suitable for storing and/or executing program code will include at least one processor **152** coupled directly or indirectly to memory elements 153 through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices **154** (including but not limited to keyboards, displays, pointing devices, etc.) can be coupled to the system either directly or through intervening I/O controllers. Connections to the I/O may encompass connection links including intervening private or public networks. The communication links may comprise serial interconnections, such as RS-232 or RS-422, Ethernet connections, Gigabit Ethernet connections, SCSI interconnections, iSCSI interconnections, ESCON interconnections, Fibre Channel interconnections, FICON interconnections, a Local Area Network (LAN), a private Wide Area Network (WAN), a public wide area network, Storage Area Network (SAN), Transmission Control Protocol/Internet Protocol (TCP/IP), the Internet, and combinations thereof.

Referring to FIGS. **1**, **2**, **3** and **4**, the holograms **122**, **123** of FIG. **1**, the holograms **122**, **320**, **321** and **322-326** of FIG. **3** and the holograms **122**, **415**, **416** and **417** of FIG. **4** may be positioned closely together. For example, once written, if the media or optical system moves to other holograms, it may be difficult to find the original point at which a particular hologram was written in order to access the particular hologram.

Referring to FIGS. **1** and **2**, in one embodiment, the holographic storage drive **100** of a holographic data storage system **200** is configured to write and read holograms **122**, **123** at a plurality of locations of at least one holographic storage medium **119**. The control **150** of the holographic data storage system is configured to operate the holographic storage drive to write at least a group of the holograms **123** in a predetermined pattern in the holographic storage medium, and to write a directory hologram **122** which relates to the holograms of the group, the directory hologram forming an anchor location of the predetermined pattern.

The carrier beam **109** becomes encoded with the data of the transmissive spatial light modulator (TSLM) **114** to form the signal beam **110**, which contains the information to be stored. The resulting optical interference pattern from the signal beam **110** and reference beam **108** cause changes in the photosensitive optical material to provide a replica hologram **122** of the interference pattern.

Referring additionally to FIG. **3**, in another embodiment, the control **150** is configured to operate the holographic storage drive to write the directory hologram **122** to form the anchor location in the vicinity of a reference line **330** of the holographic storage media **301**. Reference line **330** may comprise a radial line.

The anchor location allows the control **150** to, once the directory hologram **122** is located, employ the predetermined pattern to access the desired hologram of the group of holograms. For example, in FIG. **3**, holograms **320**, **321** and **322-326** may form a group of holograms in a predetermined pattern with directory hologram **122**. In FIG. **4**, holograms **415** may form a group of holograms in a predetermined pattern with directory hologram **122**, and holograms **417** may form a group of holograms in a predetermined pattern with a directory hologram **416**.

Referring to FIGS. **1**, **2**, **5** and **6**, a directory comprising the directory hologram is also stored in a memory, for example, memory **153**, and the control **150** is configured to operate the holographic storage drive **100** to initiate access to at least one hologram of a group **123** with an access for the directory hologram of the group at the anchor location. For example, the control accesses a hologram **218** at the expected location of the directory hologram **122**. The control **150** is also configured to operate the holographic storage drive **100** to read the accessed hologram, employing a matched filter to cross-correlate the read accessed hologram with an ideal version of the directory hologram derived from the directory stored in the memory; and to determine whether the read accessed hologram is the directory hologram of the group. The determination may comprise whether the cross-correlation at least meets a threshold.

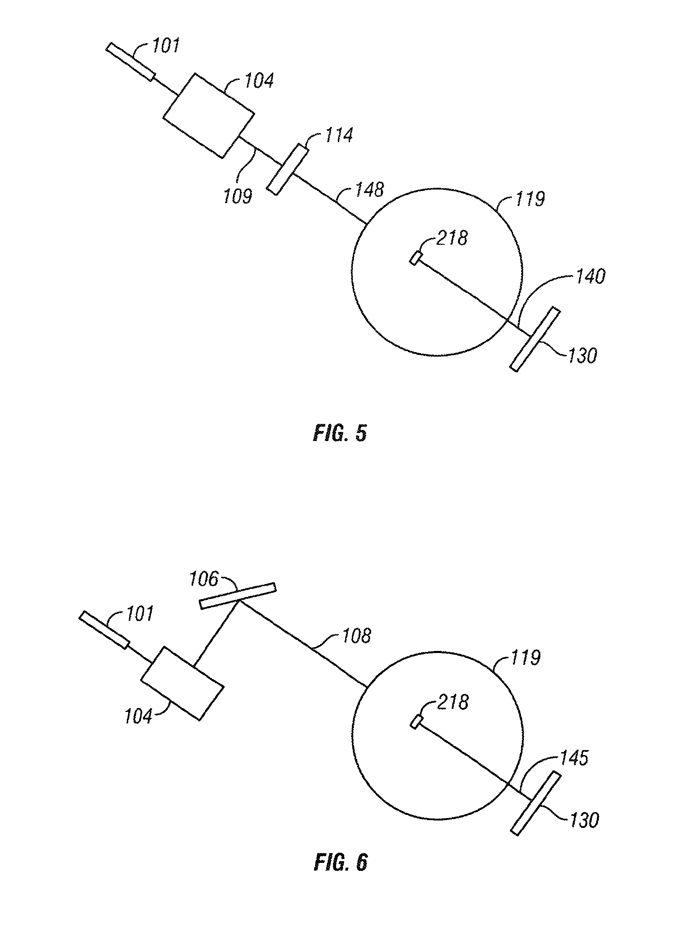

Referring to FIGS. **5** and **6**, there are two ways to read a hologram generated by the interference of a reference beam and a signal beam. In the example of FIG. **5**, the hologram **218** is illuminated with the original directory signal beam as the object wave **148**. For example, light source **101** provides a laser beam **102** which beam splitter **104** supplies as a carrier beam **109**. The beam splitter may block a reference beam or the mirror may direct the reference beam away from the hologram. The carrier beam **109** passes through the transmissive spatial light modulator (TSLM) **114** and is modulated thereby to provide an object wave **148** that comprises the desired directory image.

The desired directory image of the object wave **148** illuminates the hologram **218** and the incident light is diffracted by the stored interference pattern in such a fashion that an output beam **140** is produced that comprises information can be read by detector **130**. The information read by the detector should resemble the original reference beam used to write the hologram. In an abstract sense, a hologram that is being read can be thought of as a little like an optical XOR operation, where the stored HOLOGRAM = REFERENCE WAVE <XOR> SIGNAL BEARING WAVE, and the read output beam **140** is SIGNAL BEARING WAVE <XOR> HOLOGRAM = REFERENCE WAVE.

Alternatively, in the example of FIG. **6**, the hologram **218** is illuminated with the reference beam as the object wave **108** and the desired information of the original signal beam of the hologram **218** is reconstructed as beam **145** and is projected onto the detector **130**. For example, light source **101** provides a laser beam **102** which beam splitter **104** supplies as a reference beam to form object wave **108**. The beam splitter may block a carrier beam or the transmissive spatial light modulator (TSLM) may blank out any image via all dark pixels. The reference beam is reflected by mirror **106** to illuminate the hologram **218** and the incident light is diffracted by the stored interference pattern in such a fashion that an output beam **145** is produced that comprises information which can be read by detector **130**. The information read by the detector should resemble the original known image of the signal beam used to write the hologram **218**. As above, a hologram that is being read can be thought of as a little like an optical XOR operation, where the stored HOLOGRAM = REFERENCE WAVE <XOR> SIGNAL BEARING WAVE, and the read output beam **145** is REFERENCE WAVE <XOR> HOLOGRAM = SIGNAL BEARING WAVE.

Referring to FIGS. **1**, **2**, **5** and **6**, control **150** employs a matched filter to cross-correlate the read image of the accessed hologram **218** with the ideal version of the directory hologram **122** derived from the directory stored in the memory **153**, and determines whether the read accessed hologram **218** is the directory hologram **122** of the group. The matched filter cross-correlation calculation is a two argument calculation where one argument is the impulse response of the ideal image stored in memory **153** and the second argument is the "copy" of the image of hologram **218** read at detector **130** from the media **119**. In the case of the use of the directory image as the illumination of FIG. **4**, the expected image is the reference wave, and in the case of the use of the reference beam as the illumination of FIG. **5**, the expected image is the directory image.

The control **150** performs the following calculation between the respective image g(x,y) read from the hologram and the matched filter matched to the impulse response h(x,y) = s*(-x,-y) of the ideal case of the expected image, as shown in eqn.(1). For example, for use of the directory image for illumination of FIG. **4**, V(x,y) in eqn.(1) is the cross-correlation between the reference beam read from the disk g(x,y) and the expected reference beam s(x,y). Alternatively, for use of the reference beam **108** for illumination of FIG. **4**, V(x,y) in eqn.(1) is the cross-correlation between the image read from hologram **218** g(x,y) and the actual directory **122** s(x,y). The correlation of the arguments is to identify the extent of imperfections. V(x,y) has to meet or exceed a threshold of imperfections for the correlation to allow the control to determine that the read accessed hologram **218** is the desired directory **122**.

Eqn.[1] comprises a double integral, meaning that the integration is over the X axis and Y axis directions of the detector **130**. $\xi$ is the integration variable along the X axis of detector **130**, $\eta$ is the integration variable along the Y axis of detector **130**, and * denotes a complex conjugate.

$$V(x,y) = \iint g(\xi,\eta)\, s^*(\xi-x, \eta-y)]\, d\xi\, d\eta \qquad\qquad \text{Eqn.[1]}$$

Mathematically, V(x,y) is a surface varying along the X axis and the Y axis, for each (x,y). There is one value of V(x,y) for each detector element in detector **130**. The range of V(x,y) for each (x,y) is between -1 and +1, where +1 represents the ideal correlation of one hundred percent (100%). To maximize V(x,y), the following difference surface, Difference(x,y), is defined in Eqn.[2]. As shown, Difference(x,y) is calculated by subtracting the matched filter correlation V(x,y) from unity. Difference(x,y) may be evaluated (a) point-to-point, (b) as an arithmetic mean, (c) as a geometric mean, and (d) as a root-mean-square. Difference(x,y) ranges between 0 and +2, and the ideal difference for each value of (x,y) is 0, meaning for a value of 0 that there is no difference between the image **140** or **145** read from the holographic media **119** and the ideal holographic pattern at that point (x,y). Difference(x,y) may be evaluated point-by-point in read difference calculations, but the control **150** alternatively may quantify surface Difference(x,y) in terms of a single number, to simplify read difference calculations. Such single numbers may be MAX_Difference which is equal to the maximum value of Difference(x,y). Alternatively, AM_Difference, the arithmetic mean of the values of Difference(x,y), GM_Difference, the geometric mean of the values of

Difference(x,y), or RMS_Difference, the root-mean-square of the values of Difference(x,y) may be used in the read difference calculations.

$$\text{Difference}(x,y) = 1 - V(x,y) \qquad\qquad \text{Eqn.[2]}$$

V(x,y) would have to exceed a threshold for the correlation to be acceptable. Alternately, Difference(x,y), MAX_Difference, AM_Difference, GM_Difference, or RMS_Difference, would have to be beneath a threshold for the correlation to be acceptable. It is the set of Difference(x,y), MAX_Difference, AM_Difference, GM_Difference, and RMS_Difference which give the most flexibility for implementation.

The cross-correlation can never exceed a 100% correlation (a perfect condition). However, a cross-correlation less than 100% means that imperfections exist.

In the example of FIG. **5**, where the read output beam **140** is expected to comprise the wave resembling the reference wave that was used to write the hologram, if the correlation is 100%, all points of the detector **130** would be "1"s, and the correlation calculation would produce all "1"s (100%).

Thus, the terms "cross-correlation", "matched filter" and "known image" refer to whatever means is used to make the correlation, whether the directory image is used to generate a read output beam that resembles the reference wave and the correlation calculation is with respect to the impulse response of the reference wave, or whether a reference wave is used to generate a read output beam that resembles the expected directory image and the correlation calculation is with respect to the impulse response of the directory image.

If the accessed hologram **218** is not the directory hologram, the control **150** again attempts to access the directory hologram **122**. Once a determination has been made that the accessed hologram **218** is the directory hologram **122** at the anchor location for the group of holograms, the desired hologram or holograms of the group are accessed in accordance with the predetermined pattern.

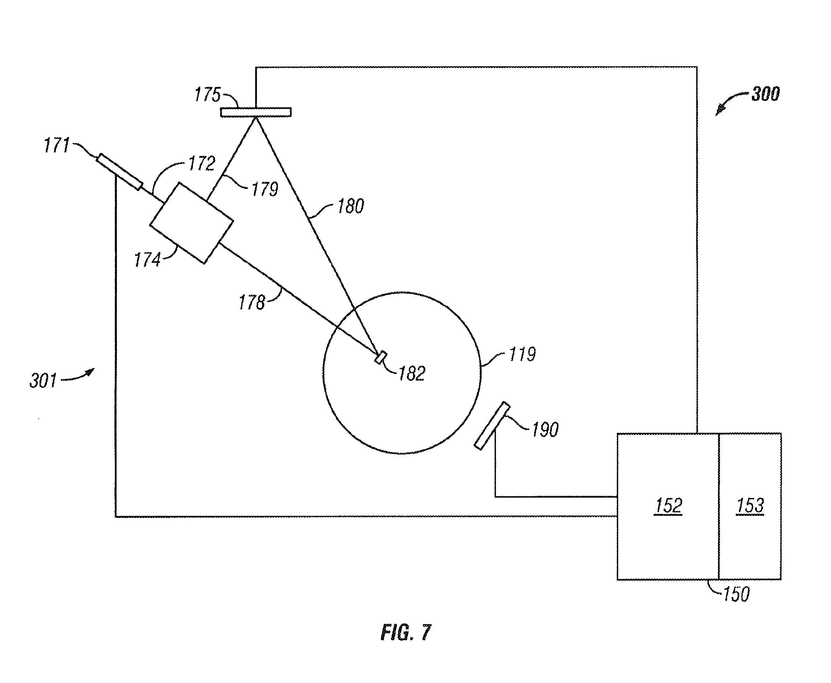

FIG. **7** represents an alternative embodiment of a holographic storage system **300** having a holographic storage drive **301** with an alternative type of write path, called a "reflective" light path. A light source **171** provides a laser beam **172** which is split by beam splitter **174** into a reference beam **178** and a carrier beam **179**. The reference beam **178** is directed to the holographic storage media **119**. The carrier beam **109** is directed to a reflective spatial light modulator (RSLM) **175** and is modulated thereby to provide a signal beam **180**.

A reflective spatial light modulator (RSLM) **175** may comprise an assembly of a plurality of micro mirrors. Alternatively, the RSLM comprises a liquid crystal on silicon ("LCOS") display device in which the crystals are coated over the surface of a silicon chip. The electronic circuits that drive the formation of the image are etched into the chip, which is coated with a reflective (for example, aluminized) surface. The resulting optical interference pattern from the signal beam **180** and reference beam **178** cause chemical and/or physical changes in the photosensitive optical material to provide a replica **182** of the interference pattern, as discussed above.

In a manner similar to the TSLM drive **100** of FIGS. **1** and **2**, the holographic storage drive **301** of FIG. **6** is operated by a control **150**, comprising one or more computer processors **152** and one or more memories or storage apparatus **153**. The control **150** and the holographic storage drive may form a holographic storage system **300**, or the control may comprise or be supplemented by additional computer processors which together operate the drive to provide the storage functionality of the holographic storage system. For example, the control **150** operates the light source **171**, the RSLM **175**, the detector **130**, and the positioning of the beams and/or the holographic storage media **119**.

The read and read-back process is also similar to the TSLM drive **100** of FIGS. **1** and **2**, creating the same images to be cross-correlated in accordance with the present invention.

Reference is made to the incorporated 11/737,670 Application for its showing of holographic data storage systems and matched filters.

The present invention is therefore applicable to the various holographic drives and light paths.

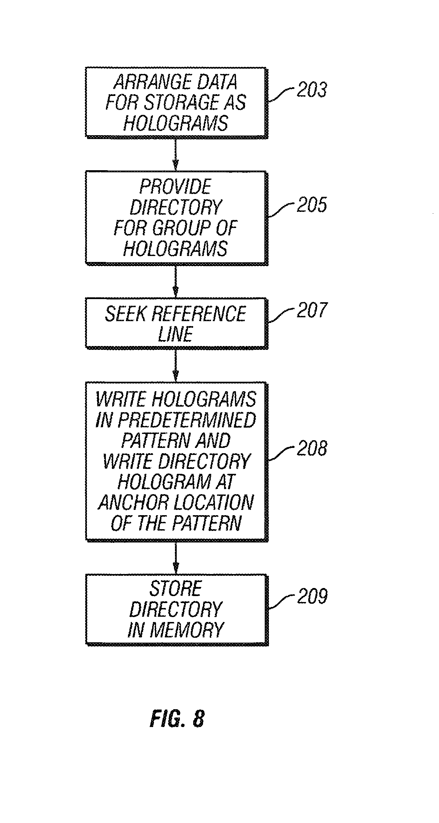

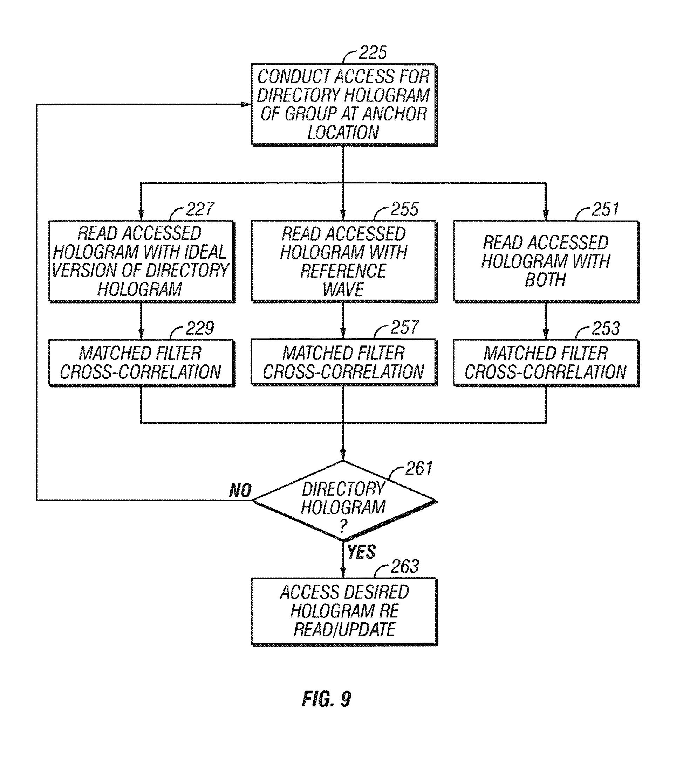

Referring additionally to FIGS. **8** and **9**, embodiments of the methods and computer program product implementations of the present invention begins at step **203** when the media **119** is mounted (if it is removable) on the holographic storage drive, and/or when the media is accessed, and data is arranged for storage as a group of holograms. In step **205**, a directory is provided for the group of holograms. The arrangement of the data and the provision of the directory may be accomplished by the control **150** or by a host system or an intermediate processor. If a reference line of the media is available, in step **207**, control **150** is optionally configured to operate the holographic storage drive **100** to seek to the vicinity of a reference line of the holographic storage media.

In step **208**, the control is configured to write at least a group of the holograms in a predetermined pattern in the holographic storage medium, and to write a directory hologram **122** which relates to the holograms of the group, the directory hologram forming an anchor location of the predetermined pattern. The anchor location may be in the vicinity of the reference line of step **207**.

In step **209**, the directory comprising the directory hologram is also stored in a memory, for example, in a memory of the host system, or, alternatively, in the memory **153**. The total directory may comprise further holograms or parts of holograms in addition to the directory hologram **122**.

Thus, a group of the holograms are stored in media **119** in a predetermined pattern, and a directory hologram **122** which relates to the holograms of the group is stored at an anchor location of the predetermined pattern.

Referring additionally to FIG. **9,** the control is configured to, in step **225**, initiate access to at least one hologram of a group with an access for the directory hologram of the group at the anchor location.

Once a hologram has been accessed, the control **150** is configured to read the accessed hologram, employing a matched filter to cross-correlate the read accessed hologram with an ideal version of the directory hologram derived from the directory stored in the memory; and to determine whether the read accessed hologram is the directory hologram of the group.

In one embodiment, the holographic storage drive is configured to read the accessed hologram in steps **227** and **229** by illuminating the accessed hologram with an object wave; and the control is configured to operate the holographic storage drive to provide the ideal version of the directory hologram **122** as the object wave and to cross-correlate the resultant wave image employing a matched filter matched to the impulse response of a reference wave for the directory hologram. As discussed above, the image for the ideal version of the directory hologram is derived from the directory stored in memory.

In a further embodiment, the holographic storage drive is configured to, in steps **251** and **253**, first conduct steps **227** and **229** and then read the accessed hologram by also illuminating the accessed hologram with a reference wave; and the control is configured to cross-correlate the resultant wave image employing a matched filter matched to the impulse response of an ideal version of the directory hologram **122**.

In another embodiment of steps **255** and **257**, the holographic storage drive is configured to read the accessed hologram by illuminating the accessed hologram with a reference wave; and the control is configured to cross-correlate the resultant wave image employing a matched filter matched to the impulse response of an ideal version **122** of the directory hologram.

In step **261**, the average of V(x,y) is compared to a correlation threshold to determine whether the accessed hologram is the directory hologram **122**. In effect, the level of imperfections is compared to threshold at which the level of imperfections is deemed to indicate that the hologram is the same as the ideal directory hologram. If the average exceeds the threshold, the hologram is deemed the directory hologram. Alternatively, the minimum V(x,y), MAX Difference, AM Difference, GM Difference, and RM Difference may be used in step **261**. Once a determination has been made that the accessed hologram is the directory hologram **122** at the anchor location for the group of holograms, in step **263**, the desired hologram or holograms of the group are accessed in accordance with the predetermined pattern.

If step **261** determines that the accessed hologram is not the directory hologram, the control **150** again attempts to access the directory hologram **122** in step **225**.

In a further embodiment, the directory hologram **122** may instead or additionally comprise metadata for a group of holograms organized as plurality of RAID data segments. The term "RAID" is understood to generally mean a "Redundant Array of Independent Disks", but herein "RAID" is intended to mean a redundant array of data segments.

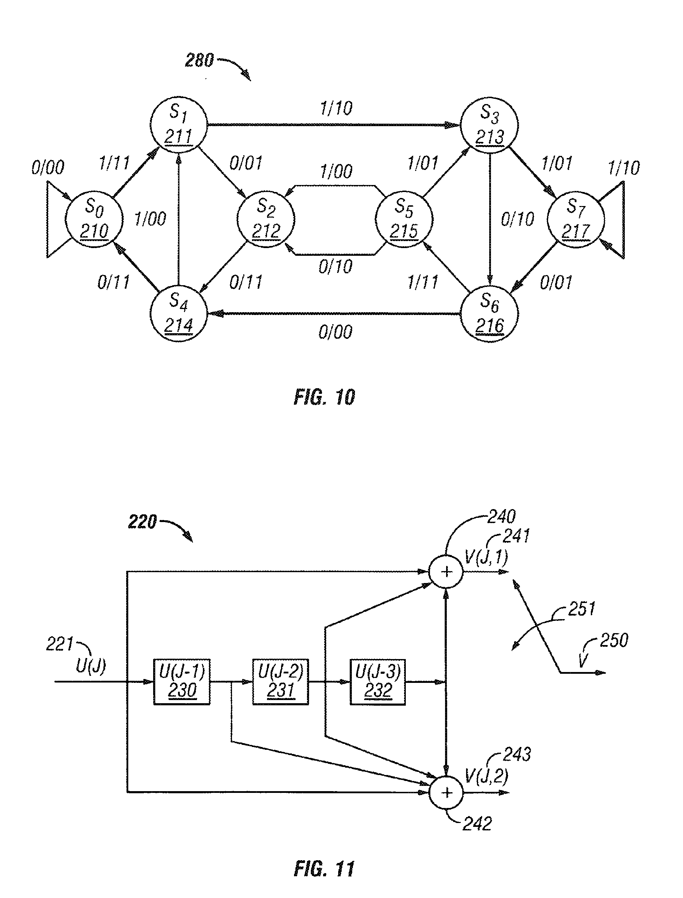

Referring to FIGS. **10-15**, one example of a RAID system for forming and reading an array of redundant data segments is discussed. Alternatively, any suitable RAID system may be used to form the redundant array of data segments.

A state diagram **280** for (2,1,3) binary convolution encoding is shown in FIG. 10. State diagram **280** comprises eight states; S0 **210**, S1 **211**, S2 **212**, S3 **213**, S4 **214**, S5 **215**, S6 **216**, and S7 **217**. Discrete jumps between states, in state diagram **280**, are limited in number and direction. For example, the encoding process starting at state S0 **210** can only jump back to S0 **210** or S1 **211**. Similarly, the process from S1 **211** can only jump to S2 **212** or S3 **213**, etc. Each jump between states in state diagram **280** results in the encoding of one bit of host information into two bits of encoded data. In FIG. 10, highlighted encoding path S0 **210**, S1 **211**, S3 **213**, S7 **217**, S7 **217**, S6 **216**, S4 **214**, and S0 **210** is shown for the example encoding of 1111000. S0 **210** to S1 **211** encodes 1 into 11. S1 **211** to S3 **213** encodes 1 into 10. S3 **213** to S7 **217** encodes I into 01. S7 **217** to S7 **217** encodes 1 into 10. S7 **217** to S6 **216** encodes 0 into 01. S6 **216** to S4 **214** encodes 0 in 00. Finally, S4 **214** to S0 **210** encodes 0 into 11. The result of this is that host information 1111000 is encoded into 11100110010011 for storage in the holographic RAID.

In FIG. **11**, encoder circuit **220** is shown for the binary (2,1,3) code of state diagram **280** of FIG. **10**.

Encoder circuit **220** is one implementation of an encoder. Encoder circuit **220** receives input data stream U(J) **221** one bit at a time, for encoding. Encoder circuit **220** comprises an m=3-stage shift register, comprising registers **230**, **231**, and **232**. The initial contents of registers **230-232** are preferably zero for the encoding process. The input host information stream U(J) **221** and the outputs of registers **230**, **231**, and **232** are selectively added by n=2 modulo-2 adders (which means there is no carryover in binary addition); comprising adder **240** to produce output V(J,1) **241**, and adder **242** to produce output V(J,2) **243**. Multiplexer **251** serializes the individual encoder outputs V(J,1) **241** and V(J, 2) **243** into encoded output V **250**. The modulo-2 adders can be implemented as XOR (exclusive or) gates. Since modulo-2 binary addition is a linear operation, the encoder is a linear feedforward shift register. Each incremental output of V **250** for an index of J, as defined by V(J,1) and V(J,2) in FIG. **11**, may be called a word.

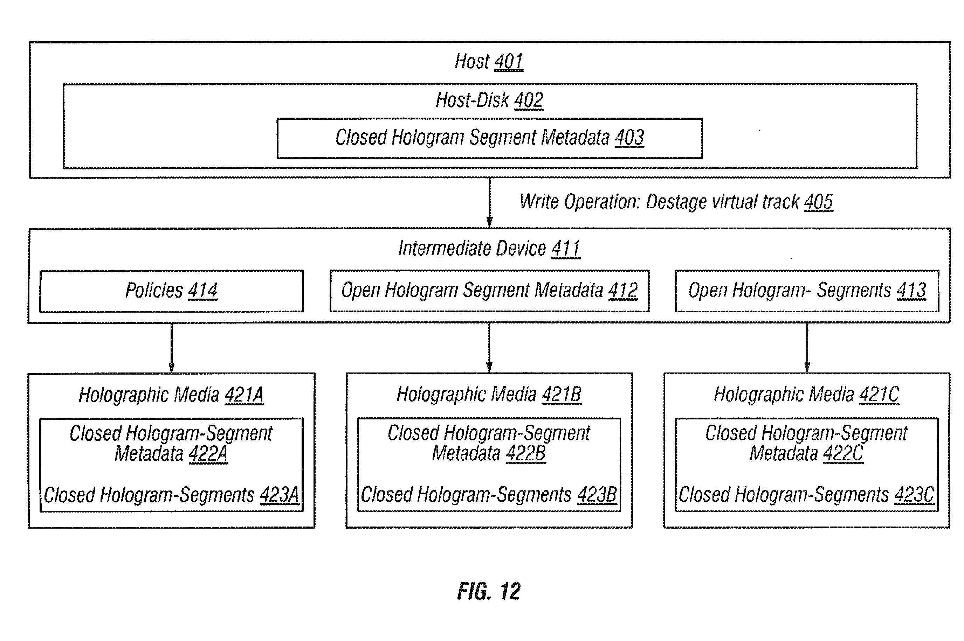

Referring to FIG. **12**, this RAID encoding is preferably done at an intermediate device **411**, where the trellis decoding is also preferably done, in order to alleviate unnecessary work at the host level **401**, **402** or at the device level.

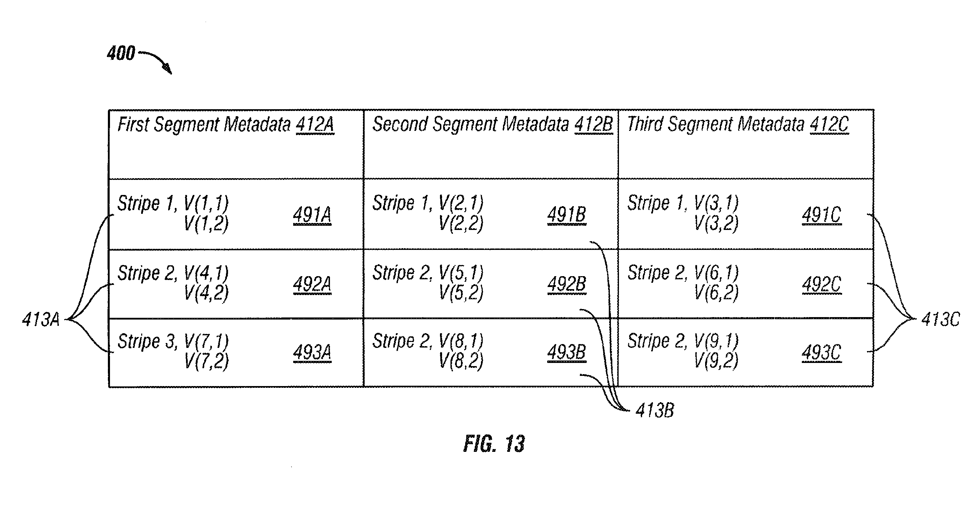

The intermediate device **411** maintains a number of open hologram segments **413**, which are segments which are being formed or arranged. Each hologram segment **413** is essentially a columnar vector component of a matrix **400** (FIG. **13**). Matrix **400** is an assemblage of open hologram segments **413**, and their respective open metadata **412**. Data is written by host **401** using "destage virtual track" operations **405** to the intermediate device **411**, where it is convolution encoded (FIGS. **10-11**) into matrix **400** in intermediate device **411**. The "destage virtual track" operation **405** can be a SCSI write command, SCSI over Fibre Channel, an iSCSI command, a GbEN command, or any other operation sending data from a host system **401** to the intermediate device **411**.

FIG. **13** shows how this data from host **401** is arranged in matrix **400** in intermediate device **411**. For example, RAID-stripe 1 comprises **491A-C**, RAID-stripe 2 comprises **492A-C**, and RAID-stripe 3 comprises **493A-C**. In FIG. **13**, the columns comprise both one of RAID-segment metadata **412A-C** and respective one of open segments **413A-C**. Each open segment **413A-C** has a portion of stripes 1-3, **491A-C** to **493A-C**. Each RAID-segment metadata **412A-C** essentially comprises the metadata associated with that portion of stripes **491A-C** to **493A-C**, so that the matrix **400** can be reassembled upon a read operation. Metadata **412A-C** uniquely identifies open segments **412A-C** relative to one another, and relative to other segments. Metadata **412A-C** may contain file name, file date and time of creation, file version, and IDs of adjacent segments in matrix **400** (for proper reassembly during the read process).

An Open RAID-Hologram-Segment Metadata **412A-C** is maintained in the intermediate device **411** for each open RAID-Holographic-Segment **413A-C**. Open RAID-Hologram-Segment Metadata **412A-C** are the metadata which is used to map how and where data are stored in the open RAID Hologram-Segments **413A-C**. When the Open Hologram-Segments **413A-C** are closed or completed and ready to be written, the Hologram-Segment Metadata **412A-C** are replicated and (a) embedded as Closed-Holograms **422A-C** within respective Closed-Hologram-Segments **423A-C** for storage on the holographic media **421A-C**.

The newly closed Hologram-Metadata is transferred to the host **401** where they used to update the overall Hologram-metadata **403**, which may be stored on a Host-Disk **402**. At this point, the intermediate device **411** ceases to retain any information about the RAID-Hologram-Segment that has just been closed.

Open Hologram-Segments **412** are closed based on user-selectable policies **414**. These Hologram-Segment close-policies comprise parameters such as (a) a maximum time a Hologram-Segment can be opened, (b) the amount data stored in a hologram segment exceeds a threshold, such as a threshold of holographic pages, etc.

The metadata is stored as a directory hologram at the anchor location for the RAID holograms. Thus, the metadata **422A-C** is used both for its logical contents and its physical location (anchor location). The RAID holograms are located in a predetermined pattern with respect to the directory hologram.

Referring to FIGS. **1**, **2**, **9** and **13**, the control **150** is configured to, in step **225**, initiate access to at least one hologram of a group with an access for the directory hologram of the group at the anchor location. Once a hologram has been accessed, the control **150** is configured to read the accessed hologram, employing a matched filter to cross-correlate the read accessed hologram with an ideal version of the directory hologram derived from the directory stored in the memory; and to determine whether the read accessed hologram is the directory hologram of the group, all as discussed above.

Once the directory hologram has been located, the directory and metadata contents may be employed to read the desired data from the RAID holograms. The RAID holograms are accessed in accordance with the predetermined pattern in which they are stored.

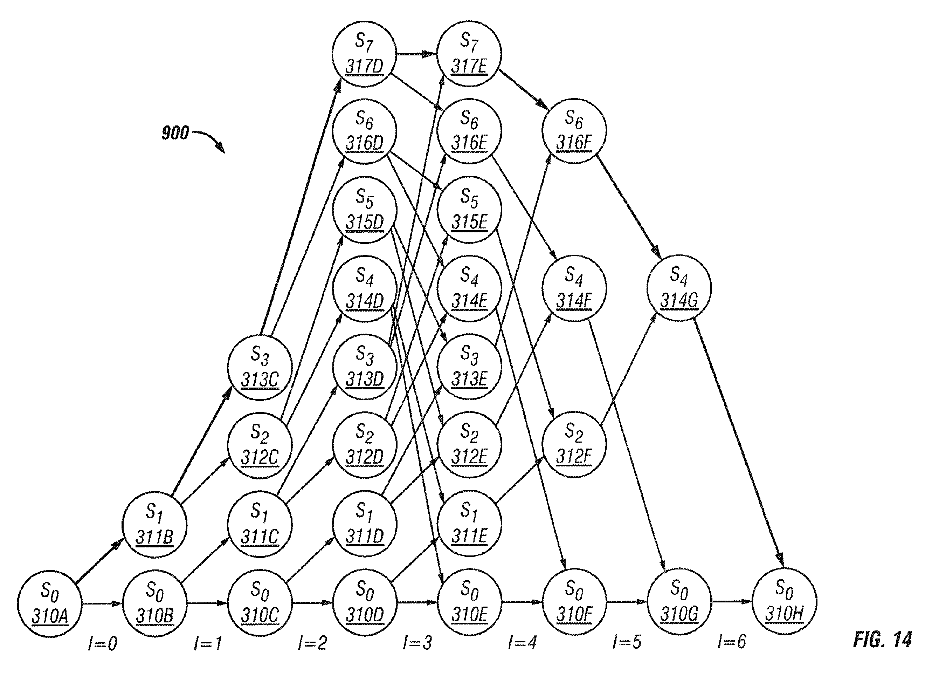

Once the individual segments **423A-C** have been reassembled in matrix **400**, the decoding process uses a trellis decoder to decode coded data and retrieve the customer data. The operation of a trellis decoder may be explained by use of trellis diagram **900** (FIG. **14**). States S0 - S7 are shown in FIG. **14** and it is assumed that the initial contents of all memory registers, of the convolution encoder used to encode the data, are initialized to zero. This means that the trellis diagram used to decode the data back into the original information always begins at state S0 and concludes at state S0.

The trellis diagram **900** begins at state S0 **310A**. From S0 **310A**, trellis diagram **900** transitions to either S0 **310B** or S1 **311B**. The increase from suffix A to suffix B in the numbering of the states in trellis diagram **900** is called a branch, and the branch index I is zero when transitioning from suffix A to suffix B. From S0 **310B**, trellis diagram **900** transitions to either S0 **310C** or S1 **311C**; and from S1 **310B**, transitions to either S2 **312C** or S3 **313C**, and the branch index I is 1. From S0 **310C**, trellis diagram **900** transitions to either S0 **310D** or S1 **311D**; from S1 **311C** transitions to either S2 **312D** or S3 **313D**; from S2 **312C** transitions to either S4 **314D** or S5 **315D**; or from S3 **313C** transitions to either S6 **316D** or S6 **317D**, and the branch index I is 3.

The next series of transitions in trellis diagram **900** show the breath of the decoding effort. From S0 **310D**, trellis diagram **900** transitions to either S0 **310E** or S1 **311E**; from S1 **311D** transitions to either S2 **312E** or S3 **313E**; from S2 **312D** transitions to either S4 **314E** or S5 **315E**; or from S3 **313D** transitions to either S6 **316E** or S6 **317E**, and the branch index 1 is 4. Also, From S7 **317D**, trellis diagram **900** transitions to either S7 **317E** or S6 **316E**; from S6 **316D** transitions to either S5 **315E** or S4 **314E**; from S5 **315D** transitions to either S3 **313E** or S2 **312E**; or from S4 **314D** transitions to either S1 **311E** or S0 **310E**.

Typically, what is shown for branch index 1=4 is repeated a plurality of times in a trellis diagram. Only one such iteration is discussed with respect to FIG. **14**. For the rest of FIG. **14**, the trellis diagram is shown to conclude, indicating the ending of the decoding process. From S0 **310E**, trellis diagram **900** transitions only to S0 **310F**; from S1 **311E** transitions only to S2 **312F**; from S2 **312E** transitions only to S4 **314F**; and from S3 **313E** transitions only to S6 **316F**, and the branch index I is 5. Also, from S7 **317E**, trellis diagram **900** transitions only to S6 **316F**; from S6 **316E** transitions only to S4 **314F**; from S5 **315E** transitions only to S2 **312F**; and from S4 **314E** transitions only to S0 **310F**. From S0 **310F**, trellis diagram **900** transitions only to S0 **310G**; and from S2 **312F** transitions only to S4 **314G**; and the branch index I is 6.

Also, from S6 316F, trellis diagram **900** transitions only to S4 **314G**; and from S4 **314F** transitions only to S0 **310G**. Finally, from S0 **310G**, trellis diagram **900** transitions only to S0 **310H**; and the branch index I is 7. Also, from S4 **314G**, trellis diagram **900** transitions only to S0 **310H**.

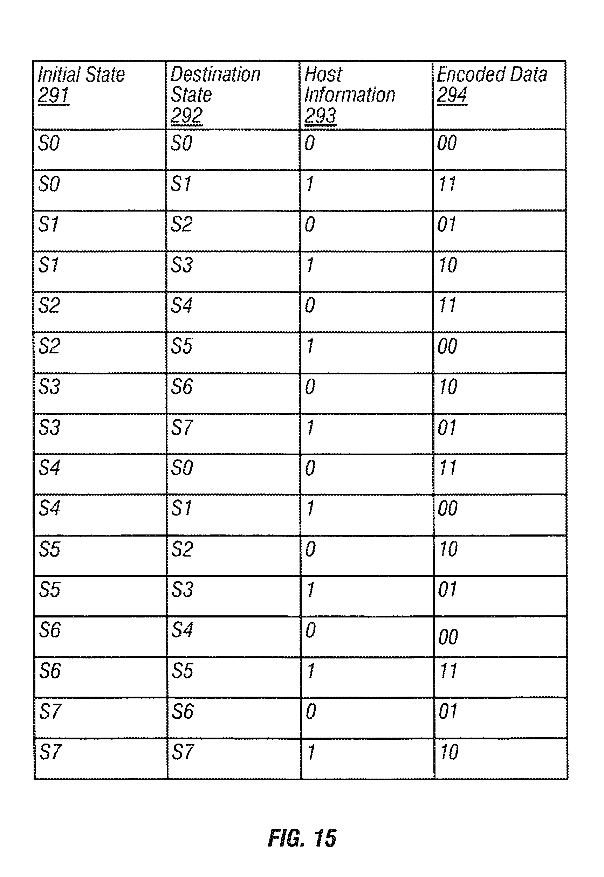

Thus, in FIG. **14**, the example of the decoding path S0 **310A**, S1 **311B**, S3 **313C**, S7 **317D**, S7 **317E**, S6 **316F**, S4 **314G**, and S0 **310H** takes the encoded data 11100110010011 and decodes it into 1111000, per the encoding-decoding table of FIG. **15**. This table is useful in explaining both the encoding and decoding process, and it is generated via Figure **10**.

Those of skill in the art will understand that changes may be made with respect to the methods discussed above, including changes to the ordering of the steps. Further, those of skill in the art will understand that differing specific component arrangements may be employed than those illustrated herein.

While the preferred embodiments of the present invention have been illustrated in detail, it should be apparent that modifications and adaptations to those embodiments may occur to one skilled in the art without departing from the scope of the present invention as set forth in the following claims.

**Claims**

1. A holographic storage system comprising:

   a holographic storage drive (100) configured to write and read holograms (122, 123) with respect to a holographic storage medium (119), said holograms (122, 123) at a plurality of locations in said holographic storage medium (119) ; and
   a control (150) configured to operate said holographic storage drive (100) to write at least a group of said holograms (122, 123) in a predetermined pattern in said holographic storage medium (119), and to write a directory hologram which relates to said holograms (122, 123) of said group to form an anchor location of said predetermined pattern;
   wherein a directory comprising said directory hologram is also stored in a memory (153); and wherein said control (150) is configured to initiate access to at least one hologram of a group with an access for said directory hologram of said group at said anchor location; to read said accessed hologram, employing a matched filter to cross-correlate said read accessed hologram (218) with an ideal version of said directory hologram (122) derived from said directory stored in said memory (153); and to determine whether said read accessed hologram is said directory hologram of said group; and
   **characterised in that**:

   wherein said holographic storage drive (100) is configured to read said accessed hologram by illuminating said accessed hologram with an object wave (108); and said control (150) is configured to operate said holographic storage drive (100) to provide said ideal version of said directory hologram (122) as said object wave (108) and to cross-correlate the resultant wave image employing a matched filter matched to the impulse response of a reference wave for said directory hologram.

2. A holographic storage system as claimed in claim 1, wherein said control (150) is configured to operate said holographic storage drive (100) to write said directory hologram to form said anchor location in the vicinity of a reference line of said holographic storage medium (119).

3. A holographic storage system as claimed in claim 1, wherein said holographic storage drive (100) is configured to read said accessed hologram by also illuminating said accessed hologram with a reference wave (108); and said control (150) is configured to also cross-correlate the resultant wave image employing a matched filter matched to the impulse response of an ideal version of said directory hologram (122).

4. A holographic storage system as claimed in claim 1, further comprising:

   an intermediate storage (411) configured to arrange data into at least one RAID configuration comprising a plurality of RAID data segments and to provide metadata of said RAID data segments; and
   wherein said control is configured to write said RAID data segments as separate holograms of at least one said group, and to write said directory hologram containing said metadata.

5. A method for storing holograms associated with at least one holographic storage medium, said holograms at a plurality of locations in said holographic storage medium (119); comprising the steps of:

   writing at least a group of said holograms in a predetermined pattern in said holographic storage medium (119); and
   writing a directory hologram which relates to said holograms of said group at an anchor location of said predetermined pattern;
   initiating access to at least one hologram of a group with an access for said directory hologram of said group at said anchor location and wherein a directory comprising said directory hologram is also stored in a memory (225);
   reading said accessed hologram, employing a matched filter to cross-correlate said read accessed hologram with an ideal version of said directory hologram derived from said directory stored in said memory (227);
   determining whether said read accessed hologram is said directory hologram of said group (261); and

**characterised in that**:

wherein said step of reading said accessed hologram comprises illuminating said accessed hologram with an object wave; and providing said ideal version of said directory hologram as said object wave and cross-correlating the resultant wave image employing a matched filter matched to the impulse response of a reference wave for said directory hologram.

6. A method as claimed in claim 5, wherein said step of writing said directory hologram comprises writing said directory hologram to form said anchor location in the vicinity of a reference line of said holographic storage media.

7. A method as claimed in claim 5, wherein said step of reading said accessed hologram comprises illuminating said accessed hologram with a reference wave; and cross-correlating the resultant wave image employing a partial matched filter matched to the impulse response of an ideal version of said directory hologram.

8. A method as claimed in claim 5, further comprising the steps of:

arranging data into at least one RAID configuration comprising a plurality of RAID data segments and to provide metadata of said RAID data segments; and
writing said RAID data segments as separate holograms of at least one said group, and writing said directory hologram containing said metadata.


**Patentansprüche**

1. Holografisches Speichersystem, das Folgendes umfasst:

holografisches Speicherlaufwerk (100), das so eingerichtet ist, dass es Hologramme (122, 123) bezüglich eines holografischen Speichermediums (119) lesen und schreiben kann, wobei sich die Hologramme (122, 123) an einer Vielzahl von Orten in dem holografischen Speichermedium (119) befinden; und
eine Steuereinheit (150), die zur Steuerung der Funktion des holografischen Speicherlaufwerks (100) so eingerichtet ist, dass sie mindestens eine Gruppe der Hologramme (122, 123) in einem vorbestimmten Muster in das holografische Speichermedium (119) schreiben und ein sich auf die Hologramme (122, 123) der Gruppe beziehendes Verzeichnishologramm zur Bildung eines Verankerungsortes des vorbestimmten Musters schreiben kann;
wobei ein Verzeichnis, welches das Verzeichnishologramm umfasst, ebenfalls in einem Speicher (153) gespeichert wird; und wobei die Steuereinheit (150) so eingerichtet ist, dass sie den Zugriff auf mindestens ein Hologramm einer Gruppe mit dem Zugriff für das Verzeichnishologramm der Gruppe am Verankerungsort einleiten kann; dass sie das Hologramm, auf das zugegriffen wird, unter Verwendung eines passenden Filters zur Kreuzkorrelierung des Hologramms (218) mit Lesezugriff mit einer idealen Version des Verzeichnishologramms (122), die von dem in dem Speicher (153) gespeicherten Hologramm abgeleitet ist, lesen kann; und dass sie feststellen kann, ob es sich bei dem Hologramm mit Lesezugriff um das Verzeichnishologramm der Gruppe handelt; und
**dadurch gekennzeichnet, dass**:

wobei das holografische Speicherlaufwerk (100) so eingerichtet ist, dass es das Hologramm, auf das zugegriffen wird, lesen kann, indem das Hologramm, auf das zugegriffen wird, mit einer Objektwelle (108) beleuchtet wird; und wobei die Steuereinheit (150) zur Steuerung der Funktion des holografischen Speicherlaufwerks (100) so eingerichtet ist, dass sie die ideale Version des Verzeichnishologramms (122) als Objektwelle (108) bereitstellt und das resultierende Wellenbild unter Verwendung eines passenden Filters, das zu der Impulsantwort einer Referenzwelle für das Verzeichnishologramm passt, kreuzkorreliert.

2. Holografisches Speichersystem nach Anspruch 1, wobei die Steuereinheit (150) zur Steuerung der Funktion des holografischen Speicherlaufwerks (100) so eingerichtet ist, dass sie das Verzeichnishologramm zur Ausbildung des Verankerungsortes in der Nachbarschaft einer Referenzlinie des holografischen Speichermediums (119) schreiben kann.

3. Holografisches Speichersystem nach Anspruch 1, wobei das holografische Speicherlaufwerk (100) so eingerichtet ist, dass es das Hologramm, auf das zugegriffen wird, lesen kann, indem es das Hologramm, auf das zugegriffen wird, ebenfalls mit einer Referenzwelle (108) beleuchtet; und wobei die Steuereinheit (150) so eingerichtet ist, dass sie das resultierende Wellenbild unter Verwendung eines passenden Filters, das zu der Impulsantwort einer idealen Version des Verzeichnishologramms (122) passt, kreuzkorrelieren kann.

4. Holografisches Speichersystem nach Anspruch 1, das weiterhin Folgendes umfasst:

   einen Zwischenspeicher (411), der so eingerichtet ist, dass er Daten in mindestens eine RAID-Konfiguration einordnen kann, die eine Vielzahl von RAID-Datensegmenten umfasst, und dass er Metadaten der RAID-Segmente bereitstellen kann; und
   wobei die Steuereinheit so eingerichtet ist, dass sie die RAID-Datensegmente als separate Hologramme mindestens einer solchen Gruppe schreiben und das
   Verzeichnishologramm, das die Metadaten enthält, schreiben kann.

5. Verfahren zur Speicherung von Hologrammen, die mindestens einem holografischen Speichermedium zugehörig sind, wobei sich die Hologramme an einer Vielzahl von Orten in dem holografischen Speichermedium (119) befinden und das Verfahren folgende Schritte umfasst:

   Schreiben mindestens einer Gruppe der Hologramme in einem vorbestimmten Muster in das holografische Speichermedium (119); und
   Schreiben eines Verzeichnishologramms, das sich auf die Hologramme der Gruppe an einem Verankerungsort des vorbestimmten Musters bezieht;
   Einleiten eines Zugriffs auf mindestens ein Hologramm einer Gruppe mit einem Zugriff für das Verzeichnishologramm der Gruppe an dem Verankerungsort, wobei ein Verzeichnis, welches das Verzeichnishologramm umfasst, ebenfalls in einem Speicher (225) gespeichert wird;
   Lesen des Hologramms, auf das zugegriffen wird, unter Verwendung eines passenden Filters, um das Hologramm mit Lesezugriff mit einer idealen Version des von dem in dem Speicher (227) gespeicherten Verzeichnis abgeleiteten Verzeichnishologramms zu kreuzkorrelieren;
   Feststellen, ob es sich bei dem Hologramm mit Lesezugriff um das Verzeichnishologramm der Gruppe (261) handelt; und
   **dadurch gekennzeichnet, dass**:

   wobei der Schritt des Lesens des Hologramms, auf das zugegriffen wird, das Beleuchten des Hologramms, auf das zugegriffen wird, mit einer Objektwelle, und das Bereitstellen der idealen Version des Verzeichnishologramms als Objektwelle und das Kreuzkorrelieren des resultierenden Wellenbildes unter Verwendung eines passenden Filters, das zu der Impulsantwort einer Referenzwelle für das Verzeichnishologramm passt, umfasst.

6. Verfahren nach Anspruch 5, wobei der Schritt des Schreibens des Verzeichnishologramms das Schreiben des Verzeichnishologramms umfasst, um den Verankerungsort in der Nachbarschaft einer Referenzlinie des holografischen Speichermediums zu bilden.

7. Verfahren nach Anspruch 5, wobei der Schritt des Lesens des Hologramms, auf das zugegriffen wird, das Beleuchten des Hologramms, auf das zugegriffen wird, mit einer Referenzwelle und das Kreuzkorrelieren des resultierenden Wellenbildes unter Verwendung eines passenden Teilfilters, das zu der Impulsantwort einer idealen Version des Verzeichnishologramms passt, umfasst.

8. Verfahren nach Anspruch 5, das weiterhin folgende Schritte umfasst:

   Einordnen von Daten in mindestens eine RAID-Konfiguration, die eine Vielzahl von RAID-Datensegmenten aufweist, und Bereitstellen von Metadaten der RAID-Datensegmente; und
   Schreiben der RAID-Datensegmente als separate Hologramme mindestens einer solchen Gruppe; und
   Schreiben der RAID-Datensegmente als separate Hologramme mindestens einer solchen Gruppe und Schreiben des Verzeichnishologramms, das die Metadaten enthält.

**Revendications**

1. Système de mémorisation holographique comprenant :

une unité de mémorisation holographique (100) configurée pour écrire et lire des hologrammes (122, 123) par rapport à un support de mémorisation holographique (119), lesdits hologrammes (122, 123) se trouvant à une pluralité de positions dans ledit support de mémorisation holographique (119) ; et

une commande (150) configurée pour faire fonctionner ladite unité de mémorisation holographique (100) afin d'écrire au moins un groupe desdits hologrammes (122, 123) suivant un motif prédéterminé dans ledit support de mémorisation holographique (119), et afin d'écrire un hologramme de répertoire qui se rapporte auxdits hologrammes (122, 123) dudit groupe afin de former une position d'ancrage dudit motif prédéterminé ;

dans lequel un répertoire comprenant ledit hologramme de répertoire est également mémorisé dans une mémoire (153) ; et dans lequel ladite commande (150) est configurée pour initier un accès à au moins un hologramme d'un groupe avec un accès audit hologramme de répertoire dudit groupe audit emplacement d'ancrage ; pour lire ledit hologramme faisant l'objet d'un accès, en employant un filtre adapté afin de corréler par croisement ledit hologramme faisant l'objet d'un accès et d'une lecture (218) avec une version idéale dudit hologramme de répertoire (122) obtenu à partir dudit répertoire mémorisé dans ladite mémoire (153) ; et pour déterminer si ledit hologramme faisant l'objet d'un accès et d'une lecture est ledit hologramme de répertoire dudit groupe ; et **caractérisé en ce que** :

dans lequel ladite unité de mémorisation holographique (100) est configurée pour lire ledit hologramme faisant l'objet d'un accès en illuminant ledit hologramme faisant l'objet d'un accès avec une onde objet (108) ; et ladite commande (150) est configurée pour faire fonctionner ladite unité de mémorisation holographique (100) afin de fournir ladite version idéale dudit hologramme de répertoire (122) en tant que dite onde objet (108) et afin de corréler par croisement l'image d'onde résultante en employant un filtre adapté correspondant à la réponse impulsionnelle d'une onde de référence pour ledit hologramme de répertoire.

2. Système de mémorisation holographique selon la revendication 1, dans lequel ladite commande (150) est configurée pour faire fonctionner ladite unité de mémorisation holographique (100) afin d'écrire ledit hologramme de répertoire pour former ladite position d'ancrage à proximité d'une ligne de référence dudit support de mémorisation holographique (119).

3. Système de mémorisation holographique selon la revendication 1, dans lequel ladite unité de mémorisation holographique (100) est configurée pour lire ledit hologramme faisant l'objet d'un accès en illuminant également ledit hologramme faisant l'objet d'un accès avec une onde de référence (108) ; et ladite commande (150) est configurée pour corréler également par croisement l'image d'onde résultante en employant un filtre adapté correspondant à la réponse impulsionnelle d'une version idéale dudit hologramme de répertoire (122).

4. Système de mémorisation holographique selon la revendication 1, comprenant en outre:

une mémoire intermédiaire (411) configurée pour agencer les données dans au moins une configuration RAID comprenant une pluralité de segments de données RAID et pour fournir les métadonnées desdits segments de données RAID ; et

dans lequel ladite commande est configurée pour écrire lesdits segments de données RAID sous forme d'hologrammes séparés dudit au moins un groupe et pour écrire ledit hologramme de répertoire contenant lesdites métadonnées.

5. Procédé destiné à mémoriser des hologrammes associés à au moins un support de mémorisation holographique, lesdits hologrammes se trouvant à une pluralité de positions dans ledit support de mémorisation holographique (119) ; comprenant les étapes consistant à :

écrire au moins un groupe desdits hologrammes suivant un motif prédéterminé dans ledit support de mémorisation holographique (119) ; et

écrire un hologramme de répertoire qui se rapporte auxdits hologrammes dudit groupe à une position d'ancrage dudit motif prédéterminé ;

initier un accès à au moins un hologramme d'un groupe avec un accès audit hologramme de répertoire dudit groupe à ladite position d'ancrage et dans lequel un répertoire comprenant ledit hologramme de répertoire est également mémorisé dans une mémoire (225) ;

lire ledit hologramme faisant l'objet d'un accès, en employant un filtre adapté pour corréler par croisement ledit hologramme faisant l'objet d'un accès et d'une lecture avec une version idéale dudit hologramme de répertoire obtenu à partir dudit répertoire mémorisé dans ladite mémoire (227) ;

déterminer si ledit hologramme faisant l'objet d'un accès et d'une lecture est ledit hologramme de répertoire dudit groupe (261) ; et
**caractérisé en ce que** :

dans lequel ladite étape consistant à lire ledit hologramme faisant l'objet d'un accès comprend l'illumination dudit hologramme faisant l'objet d'un accès avec une onde objet ; et la fourniture de ladite version idéale dudit hologramme de répertoire en tant que dite onde objet et la corrélation par croisement de l'image d'onde résultante en employant un filtre adapté correspondant à la réponse impulsionnelle d'une onde de référence pour ledit hologramme de répertoire.

6. Procédé selon la revendication 5, dans lequel ladite étape consistant à écrire ledit hologramme de répertoire comprend une écriture dudit hologramme de répertoire afin de former ladite position d'ancrage à proximité d'une ligne de référence desdits supports de mémorisation holographique.

7. Procédé selon la revendication 5, dans lequel ladite étape consistant à lire ledit hologramme faisant l'objet d'un accès comprend l'illumination dudit hologramme faisant l'objet d'un accès avec une onde de référence ; et la corrélation par croisement de l'image d'onde résultante en employant un filtre adapté partiel correspondant à la réponse impulsionnelle d'une version idéale dudit hologramme de répertoire.

8. Procédé selon la revendication 5, comprenant en outre les étapes consistant à :

agencer des données dans au moins une configuration RAID comprenant une pluralité de segments de données RAID et fournir des métadonnées desdits segments de données RAID ; et
écrire lesdits segments de données RAID en tant qu'hologrammes séparés dudit au moins un groupe et écrire ledit hologramme de répertoire contenant lesdites métadonnées.

EP 2 168 123 B1

**FIG. 1**

**FIG. 2**

**FIG. 3**

**FIG. 4**

FIG. 5

FIG. 6

FIG. 7

```
┌─────────────────┐
│  ARRANGE DATA   │
│  FOR STORAGE AS │──── 203
│   HOLOGRAMS     │
└─────────────────┘
         │
         ▼
┌─────────────────┐
│     PROVIDE     │
│    DIRECTORY    │──── 205
│   FOR GROUP OF  │
│    HOLOGRAMS    │
└─────────────────┘
         │
         ▼
┌─────────────────┐
│  SEEK REFERENCE │──── 207
│      LINE       │
└─────────────────┘
         │
         ▼
┌─────────────────┐
│ WRITE HOLOGRAMS │
│ IN PREDETERMINED│
│   PATTERN AND   │
│ WRITE DIRECTORY │──── 208
│  HOLOGRAM AT    │
│ ANCHOR LOCATION │
│  OF THE PATTERN │
└─────────────────┘
         │
         ▼
┌─────────────────┐
│     STORE       │
│   DIRECTORY     │──── 209
│   IN MEMORY     │
└─────────────────┘
```

**FIG. 8**

*225*
CONDUCT ACCESS FOR
DIRECTORY HOLOGRAM
OF GROUP AT ANCHOR
LOCATION

*227*
READ ACCESSED
HOLOGRAM WITH IDEAL
VERSION OF DIRECTORY
HOLOGRAM

*255*
READ ACCESSED
HOLOGRAM WITH
REFERENCE
WAVE

*251*
READ ACCESSED
HOLOGRAM WITH
BOTH

*229*
MATCHED FILTER
CROSS-CORRELATION

*257*
MATCHED FILTER
CROSS-CORRELATION

*253*
MATCHED FILTER
CROSS-CORRELATION

*261*
DIRECTORY
HOLOGRAM
?

NO

YES

*263*
ACCESS DESIRED
HOLOGRAM RE
READ/UPDATE

**FIG. 9**

**FIG. 10**

**FIG. 11**

*FIG. 12*

400 ⟋

| First Segment Metadata _412A_ | Second Segment Metadata _412B_ | Third Segment Metadata _412C_ |
|---|---|---|
| Stripe 1, V(1,1)<br>V(1,2)    _491A_ | Stripe 1, V(2,1)<br>V(2,2)    _491B_ | Stripe 1, V(3,1)<br>V(3,2)    _491C_ |
| Stripe 2, V(4,1)<br>V(4,2)    _492A_ | Stripe 2, V(5,1)<br>V(5,2)    _492B_ | Stripe 2, V(6,1)<br>V(6,2)    _492C_ |
| Stripe 3, V(7,1)<br>V(7,2)    _493A_ | Stripe 2, V(8,1)<br>V(8,2)    _493B_ | Stripe 2, V(9,1)<br>V(9,2)    _493C_ |

413A

413C

413B

**FIG. 13**

EP 2 168 123 B1

FIG. 14

| Initial State 291 | Destination State 292 | Host Information 293 | Encoded Data 294 |
|---|---|---|---|
| S0 | S0 | 0 | 00 |
| S0 | S1 | 1 | 11 |
| S1 | S2 | 0 | 01 |
| S1 | S3 | 1 | 10 |
| S2 | S4 | 0 | 11 |
| S2 | S5 | 1 | 00 |
| S3 | S6 | 0 | 10 |
| S3 | S7 | 1 | 01 |
| S4 | S0 | 0 | 11 |
| S4 | S1 | 1 | 00 |
| S5 | S2 | 0 | 10 |
| S5 | S3 | 1 | 01 |
| S6 | S4 | 0 | 00 |
| S6 | S5 | 1 | 11 |
| S7 | S6 | 0 | 01 |
| S7 | S7 | 1 | 10 |

**FIG. 15**

**EP 2 168 123 B1**

**REFERENCES CITED IN THE DESCRIPTION**

**Patent documents cited in the description**

- EP 1507178 A1
- WO 2007126245 A
- WO 2005103842 A
- US 6285474 B1
- US 7116626 B1
- WO 2006093254 A1